# EUROPEAN PATENT SPECIFICATION

(11) **EP 3 479 280 B1**
(45) Date of publication and mention of the grant of the patent: **21.04.2021**
(21) Application number: 17729276.0
(22) Date of filing: 24.05.2017
(51) Int. Cl.: G06F 21/56, H04L 29/06

(54) **RANSOMWARE PROTECTION FOR CLOUD FILE STORAGE**
RANSOMEWARE-SCHUTZ FÜR CLOUD-DATEISPEICHERUNG
PROTECTION CONTRE LES LOGICIELS RANÇONNEURS POUR LE STOCKAGE DE FICHIERS EN NUAGE

(30) Priority: 01.07.2016 US 201615201007
(43) Date of publication of application: 08.05.2019
(73) Proprietor: McAfee, Inc., Santa Clara, CA 95054 (US)
(72) Inventor: HUNT, Simon, Naples FL 34102 (US); TIERNAN, Sean, Santa Clara CA 95054 (US)
(74) Representative: Maiwald Patent- und Rechtsanwaltsgesellschaft mbH
(86) International application number: PCT/US2017/034279
(87) International publication number: WO 2018/004891

(56) References cited:
- US-B1- 8 881 281
- US-B1- 9 317 686
- SCAIFE NOLEN ET AL: "CryptoLock (and Drop It): Stopping Ransomware Attacks on User Data", PROCEEDINGS OF THE INTERNATIONAL CONFERENCE ON DISTRIBUTED COMPUTING SYSTEMS, IEEE COMPUTER SOCIETY, US, 27 June 2016 (2016-06-27), pages 303-312, XP032939899, ISSN: 1063-6927, DOI: 10.1109/ICDCS.2016.46 [retrieved on 2016-08-08]

## Description

### TECHNICAL FIELD

Embodiments described herein generally relate to cloud file storage and in particular to techniques for protecting against ransomware for cloud file storage.

### BACKGROUND ART

"Ransomware," which is malware that encrypts user files and requires users to pay for release of the decryption key, is an increasingly successful tactic used by cybercriminals. It is effective because malware protection typically relies on identification through signature and removal of infection. Recovery of data becomes impossible in the case of a new malware variant that is not identified in time on a user's device.

Though better detection methods can be applied to endpoints such as personal computers, in the case of cloud storage systems, blind acceptance of the changes made to cloud stored data by authorized (but infected) endpoints means that an infection can propagate changes and destroy both local and cloud stored data. Users lose both their local data and cloud backups, forcing them to make a deal with cybercriminals to regain access to their personal data, pictures etc.

Since user "files" are stored as data structures within cloud services, traditional file-based protection methods are unsuitable for cloud storage environments Patent document US9317686B1 is relevant prior art and discloses detecting ransomware by monitoring system level file operations.

### BRIEF DESCRIPTION OF DRAWINGS

Figure **1** is a block diagram illustrating an improved system for protecting cloud storage against ransomware according to one embodiment.
Figure **2** is a flowchart illustrating a technique for protecting cloud storage against ransomware according to one embodiment.
Figures **3-4** are a block diagrams illustrating programmable devices for use with techniques described herein according to two embodiments.
Figure **5** is a block diagram illustrating a network of programmable devices according to one embodiment.

### DESCRIPTION OF EMBODIMENTS

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

As used herein, the term "processing element" can refer to a single hardware processing element or a plurality of hardware processing elements that together may be programmed to perform the indicated actions. The hardware processing elements may be implemented as virtual hardware processing elements of a virtual programmable device hosted on a physical hardware device. Instructions that when executed program the processing element to perform an action may program any or all of the processing elements to perform the indicated action. Where the processing element is one or more multi-core processors, instructions that when executed program the processing element to perform an action may program any or all of the multiple cores to perform the indicated action.

As used herein, the term "malware" can refer to any software used to disrupt operation of a programmable device, gather sensitive information, or gain access to private systems or networks. Malware includes computer viruses (including worms, Trojan horses, etc.), Bots, ransomware, spyware, adware, scareware, and any other type of malicious program.

As used herein, the term "medium" can refer to a single physical medium or a plurality of media that together store the information described as being stored on the medium.

As used herein, the term "memory" can refer to a single memory device or a plurality of memory devices that together store the information described as being stored on the medium. The memory may be any type of storage device, including random access memory, read-only memory, optical and electromechanical disk drives, etc.

As used herein, the term "cloud storage" is a model of data storage in which digital data is stored in logical pools, the physical storage spans multiple servers (and often, locations), and the physical environment is typically owned and managed by a hosting company that provides services to many different entities. However, cloud storage may be provided in a private cloud, where the cloud infrastructure is operated solely for a single organization, whether managed internally or by a third party, and hosted either internally or externally to the organization. Hybrid clouds may combine private and non-private cloud resources. Cloud storage often involves mapping the cloud storage to a local drive, allowing the user to see and use the cloud storage using operating system native interfaces as if the remote cloud storage were a local drive. However, cloud storage may also interface with the user through a non-native interface, such as those provided by document management systems, that provides functionality different from a native operating system interface

The invention is defined by the appended independent claims.

The techniques described below provide safeguards that attempt to ensure the integrity of data stored in the cloud while providing a means for recovery or protection from denial of access to that data.

A practical example of the value of these techniques is recent press re the ransomware "cryptolocker" in which claims are made that cryptolocker targeted data stored in the Google Drive™ service. (GOOGLE DRIVE is a trademark of Google, Inc.; GOOGLE is a registered trademark of Google, Inc.) In reality, the fault lies with the Google Drive replication tool (desktop Google Drive) which seamlessly replicates local file changes to the Google® cloud storage. In these cases, cryptolocker encrypts the local Google Drive folder, and Google Drive transmits those changes to the cloud, thus removing the possibility of recovering the files unless prior versions are available.

In brief, techniques described below sit in-line with the cloud file access flow (WebDAV and others) and look for transactional anomalies. Through analyzing typical user behavior, we can identify certain actions common to ransomware, and uncommon to normal user interaction. By implementing behavioral analysis of changes to cloud data storage at an application programming interface (API) level, we can identify potential "ransomware" activity and request additional authorization from users prior to committing those changes.

Identification of abnormal actions may result in the cloud service taking protective action, such as denying future changes, requiring the user to approve the changes, unwinding recent changes from a backup, etc. The detection techniques are independent of how any cloud service structures their file access I/O, by applying the techniques to the API-based access that cloud storage systems provide. One important distinction between cloud services and local storage systems is that data is typically stored by cloud storage service providers as records within a database, rather than ordinary operating system (OS) filesystem data. Current endpoint detection techniques focus on local file access and perform block-level analysis and other I/O activities. The techniques described herein move up the stack to focus on logical API-level analysis and can be implemented anywhere in the flow where API calls can be seen unencrypted.

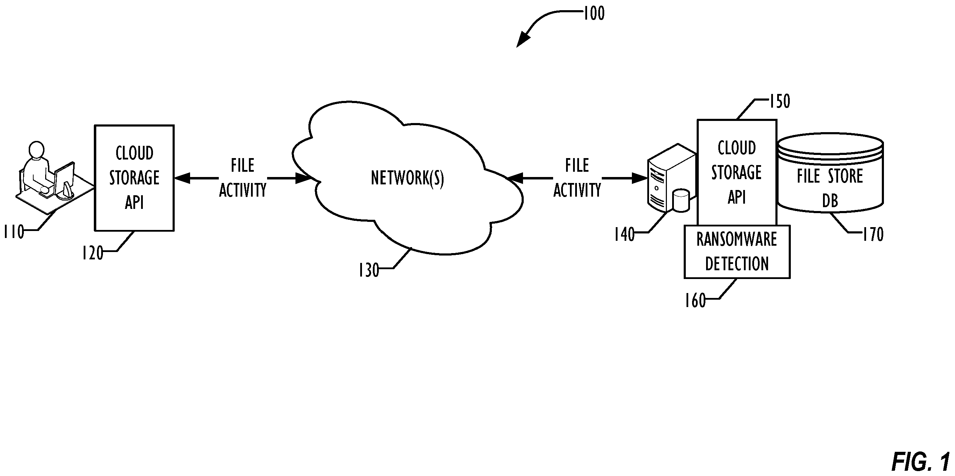

FIG. 1 is a block diagram illustrating a system 100 in which ransomware attacks on local data may be blocked from infecting the user's cloud storage data according to one embodiment. A user at workstation 110 has an account with a cloud storage service. Although illustrated in FIG. 1 as a desktop computer, the user's device may be any type of programmable device that may access cloud storage, including mobile devices such as mobile phones and tablets, desktop computers, and laptop computers. A single user and workstation 110 is illustrated in FIG. 1 for clarity, but cloud storage providers typically have millions of subscribers to the cloud storage service, any of which could have the local workstation be infected by ransomware. Typically, the cloud storage is mapped as a local disk on the workstation 110, allowing the user to interact with the cloud storage as if it were local. However, in some embodiments, the remote storage may be a document management system, typically one made available on an enterprise level.

A cloud storage API 120 installed on the user workstation 110 provides the interface to allow reading, writing, creating, and deleting of files in the cloud storage system. File activity typically traverses one or more networks 130, which may be any number of interconnected networks of any type, to reach a cloud storage server 140. The cloud storage server 140 uses its own cloud storage API to store user file data in a file store database 170. Although a single cloud storage server 140 and file store database 170 are illustrated in FIG. 1 for clarity, one of skill in the art will understand that numerous servers 140 and databases 170 are typically used by a cloud storage provider to implement the cloud storage functionality.

Different cloud services may implement the techniques differently based on the exact API calls used to service users, their location, naming conventions, parameters, etc. One type of API interface that allows user file activity to traverse the network(s) 130 may be the Web Distributed Authoring and Versioning (WebDAV) extensions to the Hypertext Transfer Protocol (HTTP) that allows clients to perform remote web content operations. WebDAV is defined by the Internet Engineering Task Force in RFC 4918.

As described below, a ransomware detection module 160 may interact with the cloud storage API 150 to intercept user file activity, detect and prevent possible ransomware attacks, and offer remediation to the user. In some embodiments, the ransomware detection module 160 hooks into the cloud storage API 150 on the cloud storage server 140, using any desired hooking technique. Any other technique for allowing the ransomware detection module 160 to interact with the cloud storage API 150 may be used.

In some embodiments, a ransomware detection agent (not shown in FIG. 1) may be present on user workstation 110 to obtain context in addition to the ransomware detection module 160 within the cloud service provider's infrastructure. Regardless, the focus is on performing anomaly detection on traffic generated by API interaction with the cloud service instead of file I/O.

Typically cloud service providers provide online cloud storage by storing user data as entries in a database, not as typical files in a filesystem. Few, if any, cloud storage providers use an actual filesystem for storing user data. Therefore, traditional filesystem filter mechanism are inappropriate to the task of protecting cloud storage systems, thus the novel approach of performing analytics to detect anomalous activity is inserted into the cloud storage API 150 itself, not at the OS file system level.

The ransomware detection module 160 filters cloud storage API 150 calls to track modification to existing data structures (which represent user stored files) within the cloud storage system. This monitors for behavior indicating ransomwarelike activity at an API level. The approach is statistical, looking at sequences of events, rather than basing decisions on individual events. For example, a sequence of API calls that have a 1:1 delete and create ratio or similarly sized data objects may indicate the replacement of existing user data structures with new data, such as when ransomware might replace photos with encrypted versions of the photos. More than one sequence of this type may be used by different ransomware: (a) Read A, write B of same size, delete A; (b) Read A, write A with full overwrite; or (c) Read A, B, C, D, ..., write A1, B1, C1, D1, ...., delete A, B, C, D, ....Other read, write, delete sequences may be used that indicate a ransomware delete and create sequence.

Another sequence of API calls that may by indicative of ransomware comprises deleting of existing data, and creation of new data with near-matching names tags, For example, deletion of test.txt and creation of test.txt.encrypted may be an indication of ransomware on the user workstation 110.

In another embodiment, the ransomware detection module 160 may monitor for behavior indicating ransomware by examining the data accompanying an API call and comparing it to the current data stored for an entry. The following are examples of behavior that may suggest ransomware:

(a) Overwriting existing data with significantly different content, such as a highly different hash map. Most updates to cloud services are partial file writes, not complete same-name data replacement).

(b) Overwriting existing low entropy data with high entropy data, which may indicate encryption of unencrypted user "files."

As indicated above, some embodiments may optionally augment the data collection by installing an agent on the endpoint device 110 to obtain user context. For example, the agent may:
(a) Determine whether the communication with the cloud API 120 is related to local files, or direct cloud API interaction;
(b) Determine whether the cloud API 120 calls originate from the local machine or from elsewhere, which may indicate a cloud storage account credential compromise;
(c) Act as a mechanism to alert the user of activity and seek instruction as to whether to allow/block the activity; or
(d) Offer the user of workstation 110 an opportunity to recover files potentially corrupted by the ransomware activity.

The ransomware detection module 160 may employ monitoring rules for filtering read, delete, write sequences, as well as delete, write sequences, to identify situations where the activity is due to replication of local files, or is the result of direct manipulation of the cloud storage API.

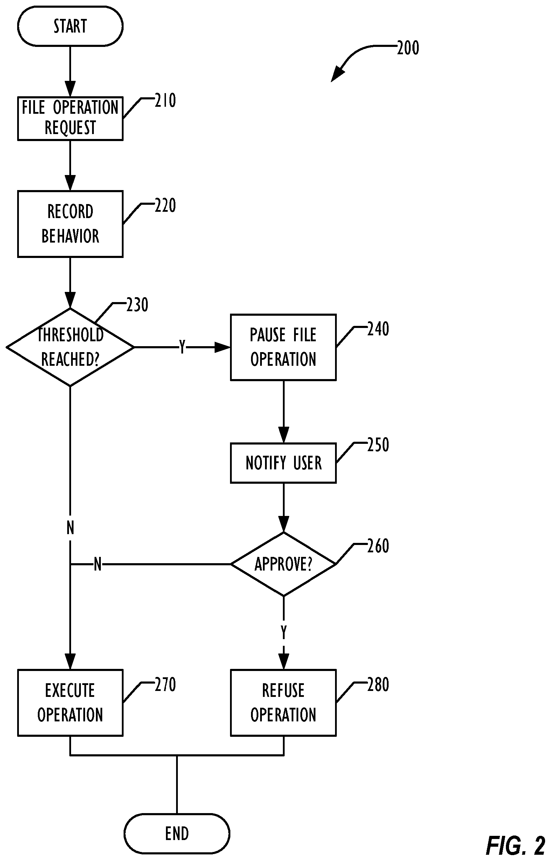

FIG. 2 is a flowchart 200 illustrating a technique for detecting ransomware activity according to one embodiment. In block 210, file operation requests made by the user workstation 110 are detected and analyzed. Because ransomware file operations are individually ordinary file operations, any one specific file operation is generally not recognizable as an indication of ransomware activity. Thus in block 220 the behavior is recorded to allow detection of sequences of actions that together may indicate ransomware activity, such as the sequences described above.

In addition, even a sequence of activity in isolation such as a single read and write of a file with different data may not indicate ransomware activity. Therefore, to avoid false positive detections, embodiments may use a heuristic approach that recognize multiple sequences of activity as an indication of ransomware activity. For example, an embodiment may define a threshold number of events in a time period as an indication of ransomware activity. In another example, an embodiment may define a threshold number of files acted upon in in a time period as an indication of ransomware activity, so that reading and writing one file in a directory may not indicate ransomware activity, but reading and writing every file in a directory in a short period of time may. Embodiments may use configurable rules or any other desired technique to indicate the thresholds and other heuristics that are to be used to discover ransomware activity. These rules may be modified from time to time as more information about ransomware behavior is recognized.

In block 230, if a threshold value for ransomware is reached or any other rule indicating ransomware is triggered, then in block 240 the ransomware detection module 160 may cause the cloud storage server 140 to disable performing file activity for the user workstation 110. Until that time, file operations may proceed without interruption. The disablement instituted in block 240 may be configured as desired. For example, the disablement may be a temporary pause for a predetermined time before automatically re-enabling file operations, or may lock the user's cloud storage account until a positive action by the user is performed, such as a re-login. Other ways to pause, slow down, or disable file activity may be instituted as desired.

If desired, upon disabling file activity in block 240, the user may be notified of the action in block 250 and offered a chance in block 260 to approve or disapprove the possibly malicious activity. If approved, then the file operation may continue in block 270, and if disapproved, the file operation may be refused in block 280. Additional user-directed actions or system-directed actions may also be required at this time, such as requiring the user to change a password or other authentication credential before allowing continued file activity.

In some embodiments, the user may not be given an opportunity to approve or disapprove the activity, but the cloud storage server 140 may simply execute or refuse the operation that last triggered the concern as indicating possible ransomware. An indication of the refusal may be provided back to the user as an error in the request as desired.

In some embodiments, the ransomware detection module 160 may learn and update its rules or heuristics based on the user's response to notification. For example, if the user always approves read, delete, write sequences of some number greater than the current threshold, the ransomware detection module 160 may choose to increase the threshold value that triggers a possible refusal of the file operation. Other changes may be made based upon machine learning techniques and analysis of user responses to notifications. In another example, the user may indicate that no request for approval or disapproval is desired, and that the ransomware detection module should always trigger refusal of an operation if the threshold is reached or other rule or heuristic is triggered. Where an agent is included on the endpoint user workstation 110, context information from the agent may be used to adjust the behavior, possibly eliminating additional false positive or even false negatives.

Because the file operations are recorded in block 220, detailed information may be available for all file operations that were considered prior to whatever caused the recognition that a ransomware event was occurring. In some embodiments, that information may be used to automatically roll back the changes that have been made or recover the information from backups, without requiring the user to specify which files need attention. In another embodiment, instead of an automatic roll back, the system 100 may offer the user a list of files to be recovered and request confirmation of which files should be rolled back or recovered. Other recovery techniques may be used. For example, the cloud storage server 140 may flag files involved in the event to be preserved specially to allow the user a longer time than usual to recover earlier versions of files that may have been encrypted by the ransomware.

When ransomware activity is discovered, the cloud service may revert to a blocked mode, preventing further activity, until the user has authorized the activity through some unique authentication, such as may be their cloud login credentials. Any type of authentication to allow renewed file activity may be used. In some embodiments, the ransomware detection module 160 may offer recovery of previous versions of recently changed files, may offer the user the ability to "revert" to a certain point of time for the changed files, or other such recovery mechanisms.

Since this filter is applied within the cloud service logic, infections on unprotected devices, regardless of the type of endpoint (traditional PC, tablet, smartphone etc.) are supported, as well as the case where the cloud service is compromised through account details theft.

The techniques described above provide improvements over existing cloud storage solutions. For example, because cloud storage systems current cannot recognize ransomware attacks on the files maintained by the cloud storage system, after-the-fact recovery is limited to restoration of files from backups and versioning. In many cases, no recovery is available, because no detection is made until sometime after the ransomware has encrypted the files stored by the cloud service provider. By detecting ransomware activity as it is happening, the cloud storage system can apply immediate blocks to prevent further malicious activity, and may have a better opportunity to roll back the effects of the ransomware activity.

Current recovery often relies on users choosing on a file by file basis to recover prior versions. By detecting the ransomware activity as it occurs, prevention of damage can be minimized to the period before the sampling identifies the activity, and may be able to identify the set of files which may have been affected by the ransomware activity.

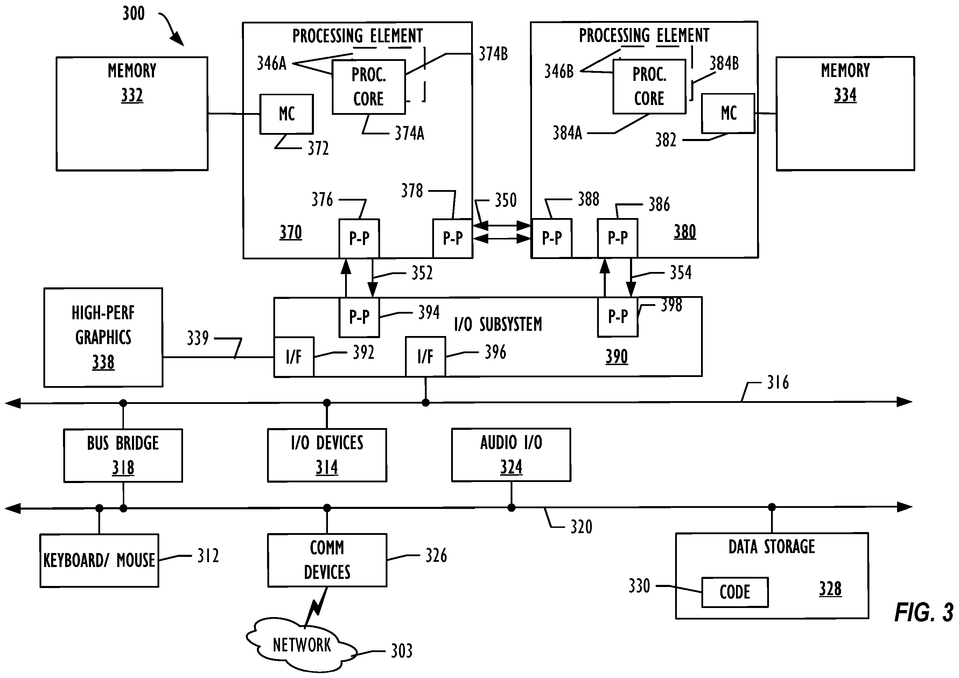

Referring now to FIG. **3****,** a block diagram illustrates a programmable device **300** that may be used for implementing the techniques described herein in accordance with one embodiment. The programmable device **300** illustrated in FIG. **3** is a multiprocessor programmable device that includes a first processing element **370** and a second processing element **380.** While two processing elements **370** and **380** are shown, an embodiment of programmable device **300** may also include only one such processing element.

Programmable device **300** is illustrated as a point-to-point interconnect system, in which the first processing element **370** and second processing element **380** are coupled via a point-to-point interconnect **350.** Any or all of the interconnects illustrated in FIG. 3 may be implemented as a multi-drop bus rather than point-to-point interconnects.

As illustrated in FIG. **3****,** each of processing elements **370** and **380** may be multicore processors, including first and second processor cores (i.e., processor cores **374a** and **374b** and processor cores **384a** and **384b**). Such cores **374a, 374b, 384a, 384b** may be configured to execute instruction code. However, other embodiments may use processing elements that are single core processors as desired. In embodiments with multiple processing elements **370, 380,** each processing element may be implemented with different numbers of cores as desired.

Each processing element **370, 380** may include at least one shared cache **346.** The shared cache **346a, 346b** may store data (e.g., instructions) that are utilized by one or more components of the processing element, such as the cores **374a, 374b** and **384a, 384b,** respectively. For example, the shared cache may locally cache data stored in a memory **332, 334** for faster access by components of the processing elements **370, 380.** In one or more embodiments, the shared cache **346a, 346b** may include one or more mid-level caches, such as level 2 (L2), level 3 (L3), level 4 (L4), or other levels of cache, a last level cache (LLC), or combinations thereof.

While FIG. **3** illustrates a programmable device with two processing elements **370, 380** for clarity of the drawing, the scope of the present invention is not so limited and any number of processing elements may be present. Alternatively, one or more of processing elements **370, 380** may be an element other than a processor, such as an graphics processing unit (GPU), a digital signal processing (DSP) unit, a field programmable gate array, or any other programmable processing element. Processing element **380** may be heterogeneous or asymmetric to processing element **370.** There may be a variety of differences between processing elements **370, 380** in terms of a spectrum of metrics of merit including architectural, microarchitectural, thermal, power consumption characteristics, and the like. These differences may effectively manifest themselves as asymmetry and heterogeneity amongst processing elements **370, 380.** In some embodiments, the various processing elements **370, 380** may reside in the same die package.

First processing element **370** may further include memory controller logic (MC) **372** and point-to-point (P-P) interconnects **376** and **378.** Similarly, second processing element **380** may include a MC **382** and P-P interconnects **386** and **388.** As illustrated in FIG. **3****,** MCs **372** and **382** couple processing elements **370, 380** to respective memories, namely a memory **332** and a memory **334,** which may be portions of main memory locally attached to the respective processors. While MC logic **372** and **382** is illustrated as integrated into processing elements **370, 380,** in some embodiments the memory controller logic may be discrete logic outside processing elements **370, 380** rather than integrated therein.

Processing element **370** and processing element **380** may be coupled to an I/O subsystem **390** via respective P-P interconnects **376** and **386** through links **352** and **354.** As illustrated in FIG. **3****,** I/O subsystem **390** includes P-P interconnects **394** and **398.** Furthermore, I/O subsystem **390** includes an interface **392** to couple I/O subsystem **390** with a high performance graphics engine **338.** In one embodiment, a bus (not shown) may be used to couple graphics engine **338** to I/O subsystem **390.** Alternately, a point-to-point interconnect **339** may couple these components.

In turn, I/O subsystem **390** may be coupled to a first link **316** via an interface **396.** In one embodiment, first link **316** may be a Peripheral Component Interconnect (PCI) bus, or a bus such as a PCI Express bus or another I/O interconnect bus, although the scope of the present invention is not so limited.

As illustrated in FIG. **3****,** various I/O devices **314, 324** may be coupled to first link **316,** along with a bridge **318** that may couple first link **316** to a second link **320.** In one embodiment, second link **320** may be a low pin count (LPC) bus. Various devices may be coupled to second link **320** including, for example, a keyboard/mouse **312,** communication device(s) **326** (which may in turn be in communication with the computer network **303**), and a data storage unit **328** such as a disk drive or other mass storage device which may include code **330,** in one embodiment. The code **330** may include instructions for performing embodiments of one or more of the techniques described above. Further, an audio I/O **324** may be coupled to second link **320.**

Note that other embodiments are contemplated. For example, instead of the point-to-point architecture of FIG. **3****,** a system may implement a multi-drop bus or another such communication topology. Although links **316** and **320** are illustrated as busses in FIG. **3****,** any desired type of link may be used. In addition, the elements of FIG. **3** may alternatively be partitioned using more or fewer integrated chips than illustrated in FIG. **3****.**

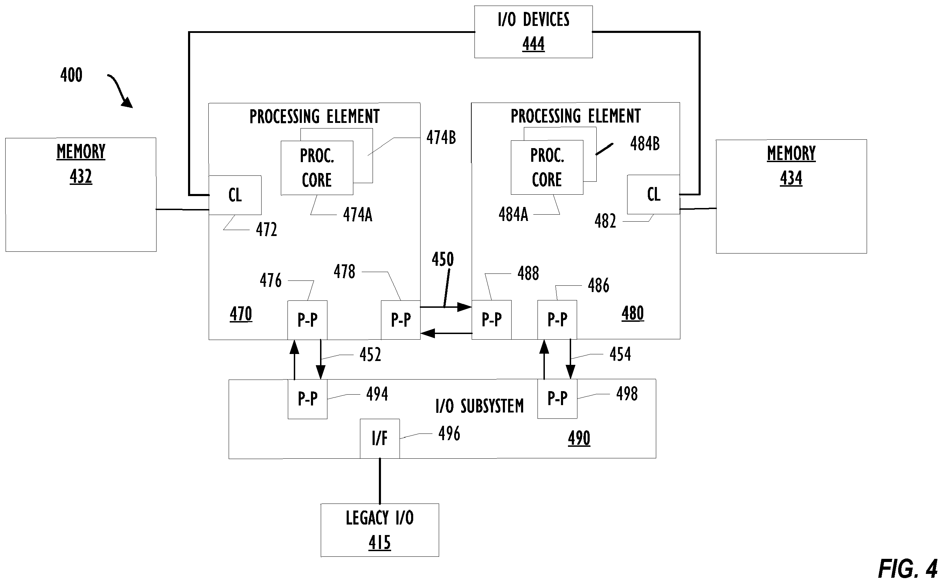

Referring now to FIG. **4****,** a block diagram illustrates a programmable device **400** according to another embodiment. Certain aspects of FIG. **4** have been omitted from FIG. **4** in order to avoid obscuring other aspects of FIG. **4****.**

FIG. **4** illustrates that processing elements **470, 480** may include integrated memory and I/O control logic ("CL") **472** and **482,** respectively. In some embodiments, the **472, 482** may include memory control logic (MC) such as that described above in connection with FIG. **3****.** In addition, CL **472, 482** may also include I/O control logic. FIG. **4** illustrates that not only may the memories **432, 434** be coupled to the CL **472, 482,** but also that I/O devices **444** may also be coupled to the control logic **472, 482.** Legacy I/O devices 415 may be coupled to the I/O subsystem **490** by interface **496.** Each processing element **470, 480** may include multiple processor cores, illustrated in FIG. **4** as processor cores **474A, 474B, 484A** and **484B.** As illustrated in FIG. **4****,** I/O subsystem **490** includes point-to-point (P-P) interconnects **494** and **498** that connect to P-P interconnects **476** and **486** of the processing elements **470** and **480** with links **452** and **454.** Processing elements **470** and **480** may also be interconnected by link **450** and interconnects **478** and **488,** respectively.

The programmable devices depicted in FIGs. **3** and **4** are schematic illustrations of embodiments of programmable devices that may be utilized to implement various embodiments discussed herein. Various components of the programmable devices depicted in FIGs. **3** and **4** may be combined in a system-on-a-chip (SoC) architecture.

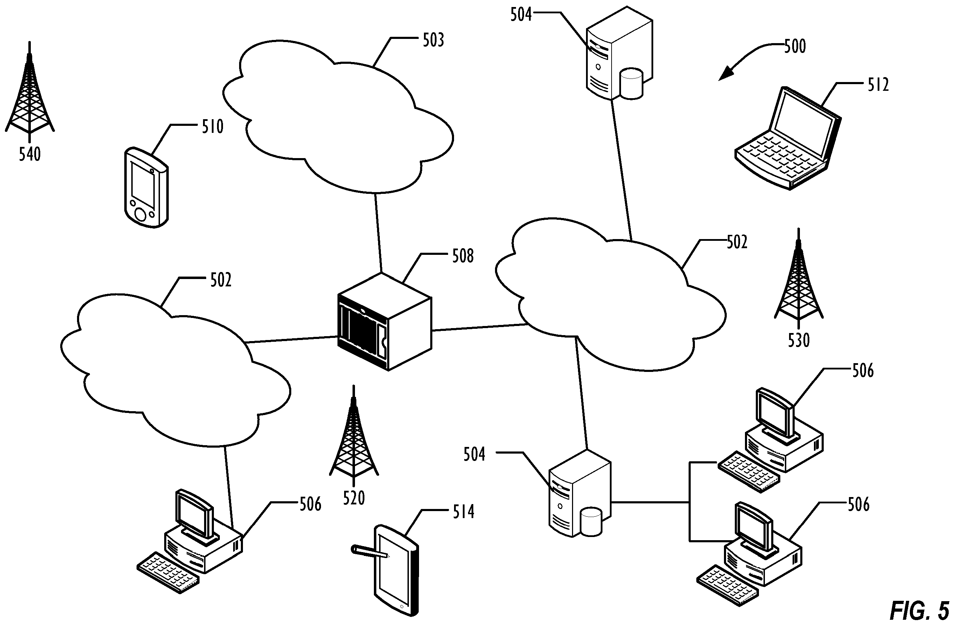

Referring now to FIG. **5****,** an example infrastructure **500** in which the techniques described above may be implemented is illustrated schematically. Infrastructure **500** contains computer networks **502.** Computer networks **502** may include many different types of computer networks available today, such as the Internet, a corporate network or a Local Area Network (LAN). Each of these networks can contain wired or wireless programmable devices and operate using any number of network protocols (*e.g.*, TCP/IP). Networks **502** may be connected to gateways and routers (represented by **508),** end user computers **506,** and computer servers **504.**

Infrastructure **500** also includes cellular network **503** for use with mobile communication devices. Mobile cellular networks support mobile phones and many other types of mobile devices. Mobile devices in the infrastructure **500** are illustrated as mobile phones **510,** laptops **512** and tablets **514.** A mobile device such as mobile phone **510** may interact with one or more mobile provider networks as the mobile device moves, typically interacting with a plurality of mobile network towers **520, 530,** and **540** for connecting to the cellular network **503.** Although referred to as a cellular network in FIG. **5****,** a mobile device may interact with towers of more than one provider network, as well as with multiple non-cellular devices such as wireless access points and routers **508.** In addition, the mobile devices **510, 512** and **514** may interact with non-mobile devices such as computers **504** and **506** for desired services

The servers **504** in this scenario represent cloud storage service providers, allowing endpoint devices such as the end user computers **506** and mobile devices **510, 512** and **514** to store files in the cloud storage servers **504** safely, with less risk that files stored by the cloud storage servers **504** may be encrypted by ransomware attacks on the end user computers **506** and mobile devices **510, 512** and **514.**

Embodiments may be implemented in one or a combination of hardware, firmware, and software. Embodiments may also be implemented as instructions stored on a computer-readable storage medium, which may be read and executed by at least one processing element to perform the operations described herein. A computer-readable storage medium may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

Embodiments, as described herein, may include, or may operate on, logic or a number of components, modules, or mechanisms. Modules may be hardware, software, or firmware communicatively coupled to one or more processing elements in order to carry out the operations described herein. Modules may be hardware modules, and as such, modules may be considered tangible entities capable of performing specified operations and may be configured or arranged in a certain manner. Circuits may be arranged (e.g., internally or with respect to external entities such as other circuits) in a specified manner as a module. The whole or part of one or more programmable devices (e.g., a standalone client or server computer system) or one or more hardware processing elements may be configured by firmware or software (e.g., instructions, an application portion, or an application) as a module that operates to perform specified operations. The software may reside on a computer readable medium. The software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Where modules are temporarily configured, each of the modules need not be instantiated at any one moment in time. For example, where the modules comprise a general-purpose hardware processing element configured using software; the general-purpose hardware processing element may be configured as respective different modules at different times. Software may accordingly program a hardware processor, for example, to constitute a particular module at one instance of time and to constitute a different module at a different instance of time. Modules may also be software or firmware modules, which operate to perform the methodologies described herein.

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled.

## Claims

1. A computer readable medium comprising instructions that, when executed, cause a cloud storage server to at least:
place a ransomware detector (160) in-line with a file access flow between a cloud storage server (140) and a remote endpoint device (110);
cause the ransomware detector (160) to hook into an application programming interface (150) of the cloud storage server (140), the cloud storage server (140) structured to store a file in a file store database (170), the file received from the remote endpoint device (110) via a network (130);
intercept, using the ransomware detector, application programming interface calls for cloud storage operations performed by the cloud storage server (140), the application programming interface calls for cloud storage operations requested by the remote endpoint device (110), and the intercept performed by the ransomware detector (160) independent of the file access input/output used by the cloud storage server (140);
record the requested cloud storage operations as recorded cloud storage operations;
perform an analysis of the recorded cloud storage operations by tracking modifications of at least a portion of the file by accessing entries stored in the file store database of the cloud storage;
based on the analysis, determine whether ransomware activity is indicated by the recorded cloud storage operations; and
block ransomware activity on the cloud storage server (140) responsive to the analysis.

2. The computer readable medium of claim 1, wherein the instructions, cause the cloud storage server to block the ransomware activity by blocking the cloud storage operations requested by the remote endpoint device and corresponding to the recorded cloud storage operations.

3. The computer readable medium of claim 1, wherein the instructions cause the cloud storage server to block the ransomware activity by:
notifying the remote endpoint device of possible ransomware activity; and
blocking the cloud storage operations corresponding to the recorded cloud storage operations responsive to instructions from the remote endpoint device on whether to allow the cloud storage operations.

4. The computer readable medium of claim 3, wherein the instructions cause the cloud storage server to perform the analysis of the recorded cloud storage operations by identifying a plurality of sequences of the recorded cloud storage operations that are indicative of ransomware activity.

5. The computer readable medium of claim 4, wherein the instructions cause the cloud storage server to perform the analysis of the recorded cloud storage operations by:
comparing the plurality of sequences of cloud storage operations in the recorded cloud storage operations with a threshold value; and
determining whether the plurality of sequences of the recorded cloud storage operations are associated with ransomware activity responsive to the comparison.

6. The computer readable medium of claim 4, wherein the sequences of recorded cloud storage operations indicate replacement of existing data entries stored in the database with new entries.

7. The computer readable medium of claim 4, wherein at least some of the sequences of cloud storage operations include deleting existing data entries and creating new data entries with near-matching names.

8. A method for ransomware protection in a cloud storage system, the method comprising:
placing a ransomware detector in-line with a file access flow between a cloud storage server of the cloud storage system and a remote endpoint device;
causing the ransomware detector to hook into an application programming interface of the cloud storage server, the cloud storage server structured to store a file in a file store database the file received from the remote endpoint device via a network;
intercepting, with the ransomware detector and by executing an instruction with at least one processor, application programming interface calls to the application programming interface, the application programming interface calls including requests for the cloud storage server to perform a plurality of cloud storage operations requested by the remote endpoint device, the intercepting performed independent of a file access input/output used by the cloud storage server;
recording, by executing an instruction with the at least one processor, the cloud storage operations included in the application programming interface calls to create recorded cloud storage operations;
performing, by executing an instruction with the at least one processor, an analysis of the recorded cloud storage operations by tracking modifications of at least a portion of the file by accessing entries stored in the database of the cloud storage,
determining, by executing an instruction with the at least one processor, ransomware activity is indicated by the recorded cloud storage operations; and
blocking ransomware activity on the cloud storage server based on the determining that the ransomware activity is indicated by the recorded cloud storage operations.

9. The method of claim 8, wherein the blocking of the ransomware activity includes:
pausing the cloud storage operations;
notifying the remote endpoint device of possible ransomware activity; and
rejecting the cloud storage operations responsive to instructions received from the remote endpoint device.

10. The method of claim 8, wherein the blocking of the ransomware activity includes:
blocking the cloud storage operations; and
unblocking cloud storage operations responsive to reauthentication of a user of the remote endpoint device.

11. The method of any of claims 8-10, wherein the performing of the analysis of the recorded cloud storage operations includes:
identifying a plurality of sequences of cloud storage operations in the recorded cloud storage operations that are indicative of ransomware activity.

12. The method of claim 11, wherein:
the performing of the analysis of the recorded cloud storage operations further includes comparing the plurality of sequences of cloud storage operations with a threshold value; and
the determining of the ransomware activity is indicated by the recorded cloud storage operations includes determining whether the plurality of sequences of cloud storage operations indicates ransomware activity responsive to the comparison.

13. The method of claim 11, wherein the plurality of sequences of cloud storage operations includes a plurality of cloud storage operations replacing existing data with new data, or sequences of cloud storage operations that delete existing data and create new data with near matching names.

14. The method of any of claims 8-10, wherein the performing of the analysis of the recorded cloud storage operations includes:
analyzing context information related to the recorded cloud storage operations from an agent on the remote endpoint device and, optionally, wherein the context information indicates the cloud storage operations originated remote to the remote endpoint device.

15. A cloud storage server comprising a processor to perform the method of any one of claims 8-14.

## Patentansprüche

1. Computerlesbares Medium, umfassend Instruktionen, die, wenn sie ausgeführt werden, einen Cloud-Speicherserver mindestens veranlassen zum:
Einbinden eines Ransomware-Detektors (160) in den Verlauf eines Dateizugriffsflusses zwischen einem Cloud-Speicherserver (140) und einer räumlich abgesetzten Endpunktvorrichtung (110);
Veranlassen des Ransomware-Detektors (160), sich in eine Anwendungsprogrammierschnittstelle (150) des Cloud-Speicherservers (140) einzuklinken, wobei der Cloud-Speicherserver (140) so strukturiert ist, dass er eine Datei in einer Dateispeicher-Datenbank (170) speichert, wobei die Datei von der räumlich abgesetzten Endpunktvorrichtung (110) über ein Netzwerk (130) empfangen wird;
Abfangen, unter Verwendung des Ransomware-Detektors, von Anwendungsprogrammierschnittstellen-Aufrufen für Cloud-Speicheroperationen, die durch den Cloud-Speicherserver (140) ausgeführt werden, wobei die Anwendungsprogrammierschnittstellen-Aufrufe für Cloud-Speicheroperationen durch die räumlich abgesetzte Endpunktvorrichtung (110) angefordert werden und das Abfangen durch den Ransomware-Detektor (160) unabhängig von der durch den Cloud-Speicherserver (140) verwendeten Dateizugriffs-Eingabe/Ausgabe ausgeführt wird;
Aufzeichnen der angeforderten Cloud-Speicheroperationen als aufgezeichnete Cloud-Speicheroperationen;
Ausführen einer Analyse der aufgezeichneten Cloud-Speicheroperationen durch Verfolgen von Modifizierungen mindestens eines Abschnitts der Datei durch Zugreifen auf Einträge, die in der Dateispeicher-Datenbank des Cloud-Speichers gespeichert sind;
Bestimmen, auf der Grundlage der Analyse, ob eine Ransomware-Aktivität durch die aufgezeichneten Cloud-Speicheroperationen angezeigt wird; und
Sperren von Ransomware-Aktivitäten auf dem Cloud-Speicherserver (140) in Reaktion auf die Analyse.

2. Computerlesbares Medium nach Anspruch 1, wobei die Instruktionen den Cloud-Speicherserver veranlassen, die Ransomware-Aktivität zu sperren, indem er die Cloud-Speicheroperationen sperrt, die durch die räumlich abgesetzte Endpunktvorrichtung angefordert wurden und den aufgezeichneten Cloud-Speicheroperationen entsprechen.

3. Computerlesbares Medium nach Anspruch 1, wobei die Instruktionen den Cloud-Speicherserver veranlassen, die Ransomware-Aktivität zu sperren durch:
Benachrichtigen der räumlich abgesetzten Endpunktvorrichtung über mögliche Ransomware-Aktivitäten; und
Sperren der Cloud-Speicheroperationen, die den aufgezeichneten Cloud-Speicheroperationen entsprechen, in Reaktion auf Instruktionen von der räumlich abgesetzten Endpunktvorrichtung, die festlegen, ob die Cloud-Speicheroperationen zugelassen werden sollen.

4. Computerlesbares Medium nach Anspruch 3, wobei die Instruktionen den Cloud-Speicherserver veranlassen, die Analyse der aufgezeichneten Cloud-Speicheroperationen durchzuführen, indem mehrere Sequenzen der aufgezeichneten Cloud-Speicheroperationen, die auf eine Ransomware-Aktivität hinweisen, identifiziert werden.

5. Computerlesbares Medium nach Anspruch 4, wobei die Instruktionen den Cloud-Speicherserver veranlassen, die Analyse der aufgezeichneten Cloud-Speicheroperationen durchzuführen durch:
Vergleichen der mehreren Sequenzen von Cloud-Speicheroperationen in den aufgezeichneten Cloud-Speicheroperationen mit einem Schwellenwert; und
Bestimmen, in Reaktion auf den Vergleich, ob die mehreren Sequenzen der aufgezeichneten Cloud-Speicheroperationen mit Ransomware-Aktivitäten verknüpft sind.

6. Computerlesbares Medium nach Anspruch 4, wobei die Sequenzen aufgezeichneter Cloud-Speicheroperationen das Ersetzen existierender, in der Datenbank gespeicherter Dateneinträge durch neue Einträge anzeigen.

7. Computerlesbares Medium nach Anspruch 4, wobei mindestens einige der Sequenzen von Cloud-Speicheroperationen das Löschen existierender Dateneinträge und das Erstellen neuer Dateneinträge mit nahezu identischen Namen umfassen.

8. Verfahren zum Schutz vor Ransomware in einem Cloud-Speichersystem, wobei das Verfahren umfasst:
Einbinden eines Ransomware-Detektors in den Verlauf eines Dateizugriffsflusses zwischen einem Cloud-Speicherserver des Cloud-Speichersystems und einem räumlich abgesetzten Endpunktvorrichtung;
Veranlassen des Ransomware-Detektors, sich in eine Anwendungsprogrammierschnittstelle des Cloud-Speicherservers einzuklinken, wobei der Cloud-Speicherserver so strukturiert ist, dass er eine Datei in einer Dateispeicher-Datenbank speichert, wobei die Datei von der räumlich abgesetzten Endpunktvorrichtung über ein Netzwerk empfangen wird;
Abfangen, mit dem Ransomware-Detektor und durch Ausführen einer Instruktion mit mindestens einem Prozessor, von Anwendungsprogrammierschnittstellen-Aufrufen an die Anwendungsprogrammierschnittstelle, wobei die Anwendungsprogrammierschnittstellen-Aufrufe an den Cloud-Speicherserver gerichtete Aufforderungen umfassen, mehrere Cloud-Speicheroperationen durchzuführen, die durch die räumlich abgesetzte Endpunktvorrichtung verlangt wurden, wobei das Abfangen unabhängig von einer durch den Cloud-Speicherserver verwendeten Dateizugriffs-Eingabe/Ausgabe durchgeführt wird;
Aufzeichnen, durch Ausführen einer Instruktion mit dem mindestens einen Prozessor, der in den Anwendungsprogrammierschnittstellen-Aufrufen enthaltenen Cloud-Speicheroperationen, um aufgezeichnete Cloud-Speicheroperationen zu erzeugen;
Durchführen, durch Ausführen einer Instruktion mit dem mindestens einen Prozessor, einer Analyse der aufgezeichneten Cloud-Speicheroperationen durch Verfolgen von Modifizierungen mindestens eines Abschnitts der Datei durch Zugreifen auf Einträge, die in der Datenbank des Cloud-Speichers gespeichert sind;
Bestimmen, durch Ausführen einer Instruktion mit dem mindestens einen Prozessor, dass eine Ransomware-Aktivität durch die aufgezeichneten Cloud-Speicheroperationen angezeigt wird; und
Sperren von Ransomware-Aktivitäten auf dem Cloud-Speicherserver auf der Grundlage der Bestimmung, dass die Ransomware-Aktivität durch die aufgezeichneten Cloud-Speicheroperationen angezeigt wird.

9. Verfahren nach Anspruch 8, wobei das Sperren der Ransomware-Aktivität umfasst:
Pausieren der Cloud-Speicheroperationen;
Benachrichtigen der räumlich abgesetzten Endpunktvorrichtung über mögliche Ransomware-Aktivitäten; und
Verweigern der Cloud-Speicheroperationen in Reaktion auf von der räumlich abgesetzten Endpunktvorrichtung empfangene Instruktionen.

10. Verfahren nach Anspruch 8, wobei das Sperren der Ransomware-Aktivität umfasst:
Sperren der Cloud-Speicheroperationen; und
Entsperren von Cloud-Speicheroperationen in Reaktion auf die erneute Authentifizierung eines Benutzers der räumlich abgesetzten Endpunktvorrichtung.

11. Verfahren nach einem der Ansprüche 8-10, wobei das Durchführen der Analyse der aufgezeichneten Cloud-Speicheroperationen umfasst:
Identifizieren mehrerer Sequenzen von Cloud-Speicheroperationen in den aufgezeichneten Cloud-Speicheroperationen, die auf eine Ransomware-Aktivität hinweisen.

12. Verfahren nach Anspruch 11, wobei:
das Durchführen der Analyse der aufgezeichneten Cloud-Speicheroperationen des Weiteren das Vergleichen der mehreren Sequenzen von Cloud-Speicheroperationen mit einem Schwellenwert umfasst; und
das Bestimmen, dass die Ransomware-Aktivität durch die aufgezeichneten Cloud-Speicheroperationen angezeigt wird, das Bestimmen, ob die mehreren Sequenzen von Cloud-Speicheroperationen eine Ransomware-Aktivität anzeigen, in Reaktion auf den Vergleich umfasst.

13. Verfahren nach Anspruch 11, wobei die mehreren Sequenzen von Cloud-Speicheroperationen mehrere Cloud-Speicheroperationen umfassen, die existierende Daten durch neue Daten ersetzen, oder Sequenzen von Cloud-Speicheroperationen umfassen, die existierende Daten löschen und neue Daten mit nahezu identischen Namen erzeugen.

14. Verfahren nach einem der Ansprüche 8-10, wobei das Durchführen der Analyse der aufgezeichneten Cloud-Speicheroperationen umfasst:
Analysieren von Kontextinformationen, die sich auf die aufgezeichneten Cloud-Speicheroperationen beziehen, von einem Agenten auf der räumlich abgesetzten Endpunktvorrichtung, und
wobei optional die Kontextinformationen anzeigen, dass die Cloud-Speicheroperationen von der räumlich abgesetzten Endpunktvorrichtung stammen.

15. Cloud-Speicherserver, umfassend einen Prozessor zum Ausführen des Verfahrens nach einem der Ansprüche 8-14.

## Revendications

1. Support lisible par ordinateur, comprenant des instructions qui, lorsqu'elles sont exécutées, amènent un serveur de stockage en nuage au moins à :
mettre en place un détecteur de logiciel rançonneur (160) aligné sur un flux d'accès à des fichiers entre un serveur de stockage en nuage (140) et un dispositif d'extrémité distant (110) ;
amène le détecteur de logiciel rançonneur (160) à crocheter une interface de programmation d'application (150) du serveur de stockage en nuage (140), le serveur de stockage en nuage (140) étant structuré pour stocker un fichier dans une base de données de stockage de fichiers (170), le fichier étant reçu en provenance du dispositif d'extrémité distant (110) par le biais d'un réseau (130) ;
intercepter, à l'aide du détecteur de logiciel rançonneur, des appels d'interface de programmation d'application à des fins d'opérations de stockage en nuage par le serveur de stockage en nuage (140), les appels d'interface de programmation d'application à des fins d'opérations de stockage en nuage étant demandés par le dispositif d'extrémité distant (110), et l'interception étant réalisée par le détecteur de logiciel rançonneur (160) indépendamment de l'entrée/sortie d'accès au fichier utilisée par le serveur de stockage en nuage (140) ;
enregistrer les opérations de stockage en nuage demandées, en tant qu'opérations de stockage en nuage enregistrées ;
effectuer une analyse des opérations de stockage en nuage enregistrées en suivant les modifications d'au moins une partie du fichier en accédant à des entrées stockées dans la base de données de stockage de fichiers du stockage en nuage ; sur la base de l'analyse, déterminer si une activité de logiciel rançonneur est indiquée par les opérations de stockage en nuage enregistrées ; et
bloquer l'activité de logiciel rançonneur sur le serveur de stockage en nuage (140) en réponse à l'analyse.

2. Support lisible par ordinateur, selon la revendication 1, dans lequel les instructions amènent le serveur de stockage en nuage à bloquer l'activité de logiciel rançonneur en bloquant les opérations de stockage en nuage demandées par le dispositif d'extrémité distant et correspondant aux opérations de stockage en nuage enregistrées.

3. Support lisible par ordinateur, selon la revendication 1, dans lequel les instructions amènent le serveur de stockage en nuage à bloquer l'activité de logiciel rançonneur :
en notifiant au dispositif d'extrémité distant une possible activité de logiciel rançonneur ; et
en bloquant les opérations de stockage en nuage correspondant aux opérations de stockage en nuage enregistrées, en réponse à des instructions provenant du dispositif d'extrémité distant quant à l'opportunité d'autoriser les opérations de stockage en nuage.

4. Support lisible par ordinateur, selon la revendication 3, dans lequel les instructions amènent le serveur de stockage en nuage l'analyse à effectuer des opérations de stockage en nuage enregistrées, en identifiant une pluralité de séquences des opérations de stockage en nuage enregistrées, qui indiquent une activité de logiciel rançonneur.

5. Support lisible par ordinateur, selon la revendication 4, dans lequel les instructions amènent le serveur de stockage en nuage à effectuer l'analyse des opérations de stockage en nuage enregistrées :
en comparant la pluralité de séquences d'opérations de stockage en nuage dans les opérations de stockage en nuage enregistrées à une valeur de seuil ; et
en déterminant si la pluralité de séquences des opérations de stockage en nuage enregistrées est associée à une activité de logiciel rançonneur en réponse à la comparaison.

6. Support lisible par ordinateur, selon la revendication 4, dans lequel les séquences d'opérations de stockage en nuage enregistrées indiquent le remplacement d'entrées de données existantes, stockées dans la base de données, par de nouvelles entrées.

7. Support lisible par ordinateur, selon la revendication 4, dans lequel au moins certaines des séquences d'opérations de stockage en nuage incluent la suppression d'entrées de données existantes et la création de nouvelles entrées de données ayant des noms presque concordants.

8. Procédé de protection contre les logiciels rançonneurs dans un système de stockage en nuage, le procédé comprenant les étapes suivantes :
mettre en place un détecteur de logiciel rançonneur aligné sur un flux d'accès à des fichiers entre un serveur de stockage en nuage du système de stockage en nuage et un dispositif d'extrémité distant ;
faire que le détecteur de logiciel rançonneur crochète une interface de programmation d'application du serveur de stockage en nuage, le serveur de stockage en nuage étant structuré pour stocker un fichier dans une base de données de stockage de fichiers, le fichier étant reçu en provenance du dispositif d'extrémité distant par le biais d'un réseau ;
intercepter, à l'aide du détecteur de logiciel rançonneur et en exécutant une instruction à l'aide d'au moins un processeur, des appels d'interface de programmation d'application à destination de l'interface de programmation d'application, les appels d'interface de programmation d'application incluant des demandes pour que le serveur de stockage en nuage effectue une pluralité d'opérations de stockage en nuage demandées par le dispositif d'extrémité distant, l'interception étant réalisée indépendamment d'une entrée/sortie d'accès au fichier utilisée par le serveur de stockage en nuage ;
enregistrer, en exécutant une instruction à l'aide de l'au moins un processeur, les opérations de stockage en nuage incluses dans les appels d'interface de programmation d'application pour créer des opérations de stockage en nuage enregistrées ;
effectuer, en exécutant une instruction à l'aide de l'au moins un processeur, une analyse des opérations de stockage en nuage enregistrées, en suivant les modifications d'au moins une partie du fichier en accédant à des entrées stockées dans la base de données du stockage en nuage,
déterminer, en exécutant une instruction à l'aide de l'au moins un processeur, qu'une activité de logiciel rançonneur est indiquée par les opérations de stockage en nuage enregistrées ; et
bloquer l'activité de logiciel rançonneur sur le serveur de stockage en nuage, sur la base de la détermination de ce que l'activité de logiciel rançonneur est indiquée par les opérations de stockage en nuage enregistrées.

9. Procédé selon la revendication 8, dans lequel le blocage de l'activité de logiciel rançonneur inclut les étapes suivantes :
suspendre les opérations de stockage en nuage ;
notifier au dispositif d'extrémité distant une possible activité de logiciel rançonneur ; et
rejeter les opérations de stockage en nuage en réponse à des instructions reçues en provenance du dispositif d'extrémité distant.

10. Procédé selon la revendication 8, dans lequel le blocage de l'activité de logiciel rançonneur inclut les étapes suivantes :
bloquer les opérations de stockage en nuage ; et
débloquer des opérations de stockage en nuage en réponse à la réauthentification d'un utilisateur du dispositif d'extrémité distant.

11. Procédé selon l'une quelconque des revendications 8 à 10, dans lequel la conduite de l'analyse des opérations de stockage en nuage enregistrées comprend l'étape suivante :
identifier une pluralité de séquences d'opérations de stockage en nuage dans les opérations de stockage en nuage enregistrées, qui indiquent une activité de logiciel rançonneur.

12. Procédé selon la revendication 11, dans lequel :
la conduite de l'analyse des opérations de stockage en nuage enregistrées inclut en outre la comparaison de la pluralité de séquences d'opérations de stockage en nuage à une valeur de seuil ; et
la détermination de ce que l'activité de logiciel rançonneur est indiquée par les opérations de stockage en nuage enregistrées inclut la détermination de ce que la pluralité de séquences d'opérations de stockage en nuage indique ou non une activité de logiciel rançonneur en réponse à la comparaison.

13. Procédé selon la revendication 11, dans lequel la pluralité de séquences d'opérations de stockage en nuage inclut une pluralité d'opérations de stockage en nuage remplaçant des données existantes par de nouvelles données, ou des séquences d'opérations de stockage en nuage qui suppriment des données existantes et créent de nouvelles données ayant des noms presque concordants.

14. Procédé selon l'une quelconque des revendications 8 à 10, dans lequel la conduite de l'analyse des opérations de stockage en nuage enregistrées inclut l'étape suivante :
analyser des informations de contexte se rapportant aux opérations de stockage en nuage enregistrées, en provenance d'un agent sur le dispositif d'extrémité distant et, éventuellement, dans lequel les informations de contexte indiquent que les opérations de stockage en nuage ont une origine distante du point d'extrémité distant.

15. Serveur de stockage en nuage comprenant un processeur pour mettre en œuvre le procédé selon l'une quelconque des revendications 8 à 14.
